# EUROPEAN PATENT APPLICATION

(11) **EP 1 736 981 A1**
(43) Date of publication of application: **27.12.2006**
(21) Application number: 05728530.6
(22) Date of filing: 08.04.2005
(51) Int. Cl.: G11B 9/02, G11B 9/14

(54) **INFORMATION REPRODUCING DEVICE FOR FERROELECTRIC RECORDING MEDIUM**

(30) Priority: 08.04.2004 JP 2004114578
(71) Applicant: Pioneer Corporation, Tokyo 153-8654 (JP); Cho, Yasuo, Sendai-shi, Miyagi 980-0813 (JP)
(72) Inventor: CHO, Yasuo;, Miyagi 9800813 (JP); ONOE, Atsushi PIONEER CORPORATION, Sougou Kenyusho, 3502288 (JP)
(74) Representative: Skuhra, Udo
(86) International application number: PCT/JP2005/006942
(87) International publication number: WO 2005/098846

(57) **Abstract**

A resonance circuit is composed of a capacitor Cs of a ferroelectric layer of a recording medium, and a resonator. A change of the capacitor Cs of the ferroelectric layer is converted into a frequency of an oscillation signal by the resonance circuit. As the resonator, a resonance element having a high Q, such as an SAW resonator, is used.

## Description

### Technical Field

The present invention relates to an information reproducing apparatus for a ferroelectric recording medium which holds information by using spontaneous polarization of a ferroelectric substance.

### Background Art

As a high-density information recording medium, a magnetic memory, such as a hard disk drive, and an optical memory, such as a compact disc and a DVD, are widely used. In the technical field of the high-density information recording medium of this kind, research and development are conducted on a daily basis, toward improvement of the recording density of the recording medium. However, due to superparamagnetism in the magnetic memory and diffraction limit in the optical memory, the improvement of the recording density is limited in the both cases. For example, with regard to the magnetic memory, it is known that the limit is a recording density of 1 terabit per 6.45 square centimeter (1 square inch), even if perpendicular magnetic recording is used.

That is why a ferroelectric recording medium, which holds information by using the spontaneous polarization of a ferroelectric substance, has been recently developed. The ferroelectric recording medium is still developing, and is not generally spread yet. The ferroelectric recording medium can theoretically improve the recording density up to a unit of the crystal lattice of the ferroelectric substance. Therefore, according to the ferroelectric recording medium, it is possible to exceed the limit of the recording density of the magnetic memory or the optical memory. For example, according to a recording / reproducing method applying a technology of a Scanning Nonlinear Dielectric Microscope (SNDM) (hereinafter referred to as a "SNDM method"), experiments revealed that information can be recorded onto or reproduced from the ferroelectric recording medium at a recording density of 1.5 terabit per 6.45 square centimeter.

In Japanese Patent Application Laying Open NO. 2003-085969 (patent document 1), a technology of recording and reproducing information with respect to the ferroelectric recording medium in the SNDM method is described. Hereinafter, the information recording and reproduction by the SNDM method will be outlined.

The ferroelectric recording medium has a ferroelectric layer formed of a ferroelectric substance, such as lithium niobate (LiNbO3) and lithium tantalate (LiTaO3), for example. The information is recorded and held in the ferroelectric layer. Then, for the information recording and reproduction, a nanometer scale probe formed of metal, such as tungsten, is used.

When the information is recorded onto the ferroelectric recording medium, the probe is brought into contact with a surface (recording surface) of the ferroelectric recording medium, or the probe is brought extremely close to the surface of the ferroelectric recording medium. Then, an electric field beyond a coercive electric field is applied to the ferroelectric layer of the ferroelectric recording medium from the probe, to thereby reverse the polarization direction of the ferroelectric layer under the probe. This applied voltage is a pulse signal whose level changes in accordance with the information to be recorded, and while this voltage is applied to the ferroelectric layer via the probe, the position of the probe with respect to the ferroelectric recording medium is displaced parallel to the surface of the ferroelectric recording medium. By this, it is possible to record the information onto the ferroelectric recording medium, as the polarization state of the ferroelectric layer.

On the other hand, when the information recorded on the ferroelectric recording medium is reproduced, the fact that the nonlinear dielectric constant of the ferroelectric layer varies depending on the polarization direction of the ferroelectric layer is used. Namely, the nonlinear dielectric constant of the ferroelectric layer is read by detecting a change in capacitance of the ferroelectric layer, to thereby reproduce the information recorded as the polarization state of the ferroelectric layer. Specifically, the probe is brought into contact with the surface of the ferroelectric recording medium, or the probe is brought extremely close to the surface of the ferroelectric recording medium. Then, an alternating current electric field smaller than the coercive electric field is applied to the ferroelectric layer of the ferroelectric recording medium, to thereby create the situation that the capacitance of the ferroelectric layer changes alternately. In this situation, the change in capacitance of the ferroelectric layer is detected via the probe.

The change in capacitance of the ferroelectric layer is detected as follows. Namely, an LC resonance circuit is formed of the capacitance of the ferroelectric layer and the inductance of an external inductor. Moreover, the LC resonance circuit is connected to an amplifier circuit, to thereby form an oscillator as a whole. By this, the oscillator outputs an oscillation signal whose frequency changes in accordance with the change in capacitance of the ferroelectric layer. Then, a change in frequency of the oscillation signal is converted to a change in amplitude. Then, a component corresponding to the capacitance of the ferroelectric layer is extracted from this frequency - amplitude converted signal. Then, the information is reproduced on the basis of the extracted component.
Patent document 1: Japanese Patent Application Laying Open NO. 2003-085969

### Disclosure of Invention

### Subject to be Solved by the Invention

By the way, according to the description of the above-mentioned Japanese Patent Application Laying Open NO. 2003-085969, the oscillator including the LC resonance circuit is used to detect the change in capacitance of the ferroelectric layer of the ferroelectric recording medium and to reproduce the information. In order to improve accuracy or stability of the information reproduction, it is required to accurately convert the change in capacitance of the ferroelectric layer to the change in frequency of the oscillation signal. Thus, Q factor of the LC resonance circuit is desirably high. However, in the LC resonance circuit using an inductor as an inductance element, it is difficult to set Q to be high. Thus, there is a problem that it is difficult to improve accuracy or stability of the information reproduction.

In order to solve the above-exemplified problem, it is therefore an object of the present invention to provide an information reproducing apparatus for a ferroelectric recording medium, with high accuracy or stability of the information reproduction.

### Means for Solving the Subject

The above object of the present invention can be achieved by an information reproducing apparatus for reading and reproducing information from a recording medium which has a ferroelectric layer and which holds the information by using spontaneous polarization of the ferroelectric layer, the information reproducing apparatus provided with: a probe for scanning a surface of the recording medium and detecting a capacitance of the ferroelectric layer; a return electrode facing the surface of the recording medium at a predetermined interval and disposed near the probe; an electric field applying device for applying an electric field to the ferroelectric layer in order to enable detection of the capacitance of the ferroelectric layer by the probe; a resonator for forming a resonance circuit together with the capacitance of the ferroelectric layer detected by the probe; an oscillation signal generating device for generating an oscillation signal with a resonance frequency determined in accordance with the capacitance of the ferroelectric layer detected by the probe and the resonator; and an information reproducing device for reproducing the information held on the recording medium on the basis of the oscillation signal generated by the oscillation signal generating device.

These effects and other advantages of the present invention will become more apparent from the following embodiments and examples.

### Brief Description of Drawings

[FIG. 1] FIG. 1 is a block diagram showing a first embodiment of the information reproducing apparatus of the present invention.
[FIG. 2] FIG. 2 is a block diagram showing a second embodiment of the information reproducing apparatus of the present invention.
[FIG. 3] FIG. 3 is a block diagram showing an example of the information reproducing apparatus of the present invention.
[FIG. 4] FIG. 4 is a block diagram showing another example of the information reproducing apparatus of the present invention.

### Description of Reference Codes

1... Recording medium
2...Ferroelectric layer
10, 20, 40, 50...Information reproducing apparatus
11, 41...Probe
12, 42...Return electrode
13, 43...Electric field applying device (Alternating current power supply)
14, 44...Resonator (SAW resonator)
15, 45...Oscillation signal generating device (Oscillation amplifier circuit)
16, 12, 46, 47...Information reproducing device
17, 49...Resonance circuit

### Best Mode for Carrying Out the Invention

Hereinafter, the best mode for carrying out the present invention will be discussed in order for each embodiment, with reference to the drawings. Incidentally, the content of the drawings used for the explanation of the embodiments of the present invention embodies the constituent elements or the like of the present invention, only for the purpose of explaining technical ideas thereof. The shape, size, position, connection relationship, and the like of each constituent element or the like are not limited to the drawings. Moreover, more specific examples for carrying out the present invention will be disclosed under the section of "Examples".

### (First Embodiment)

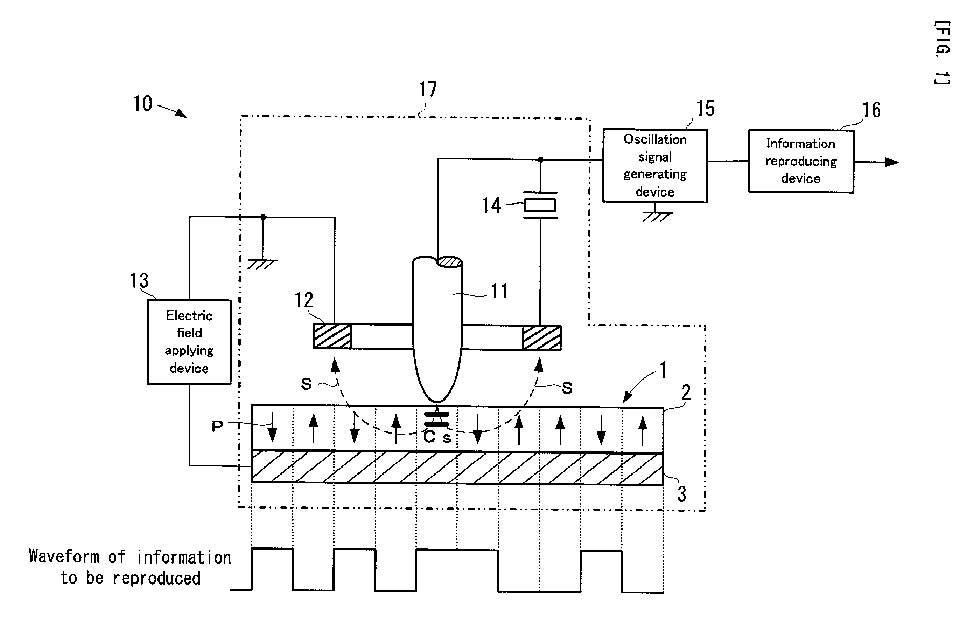

FIG. 1 shows a first embodiment of the information reproducing apparatus of the present invention. An information reproducing apparatus 10 in FIG. 1 is an apparatus for reading and reproducing the information recorded and held on a ferroelectric recording medium 1. The information reproducing apparatus 10 can be used for an information reproduction process in various types of equipment dealing with digital information, such as a computer, video equipment, audio equipment, communication equipment, medical equipment, and control machines, as with a disc drive and a disc player, for example.

The recording medium 1 has a ferroelectric layer 2 formed of a ferroelectric substance, such as lithium niobate (LiNb03) and lithium tantalate (LiTaO3), for example. The information is recorded as the polarization direction of the ferroelectric layer 2, and held by nature of the spontaneous polarization of the ferroelectric substance. On the back surface of the ferroelectric layer 2, there is a back electrode 3 formed, and an electric field can be applied to the ferroelectric layer 2 via the back electrode 3 and a return electrode 12.

The information reproducing apparatus 10 adopts the SNDM method. The principle that the information held as the polarization direction of the ferroelectric substance is reproduced by the SNDM method, is as follows. Generally, the nonlinear dielectric constant of the ferroelectric substance varies depending on the polarization direction of the ferroelectric substance. For example, as shown with an arrow P in FIG. 1, the nonlinear dielectric constant of the ferroelectric substance varies depending on whether the polarization direction of the ferroelectric substance is upward or downward. The difference in the nonlinear dielectric constant of the ferroelectric substance can be known by applying an electric field smaller than the coercive electric field of the ferroelectric substance, to the ferroelectric substance, and detecting the capacitance of the ferroelectric substance. Specifically, an electric field whose strength is lower than that of the coercive electric field of the ferroelectric substance is applied to the ferroelectric substance. Then, as shown in FIG. 1, a change in electrostatic capacitance inside or in the surface layer of the ferroelectric substance, which corresponds to the difference in the nonlinear dielectric constant of the ferroelectric substance, i.e. the difference in the polarization direction of the ferroelectric substance, is directly detected. The electric field applied to the ferroelectric substance may be a direct current electric field, but an alternating current electric field can improve detection sensitivity more. If the alternating current electric field is applied to the ferroelectric substance, the capacitance of the ferroelectric substance changes alternately, in accordance with the alternating current electric field. At this time, depending on whether the polarization direction of the ferroelectric substance is upward or downward, a curve drawn by the change in capacitance varies. This is because there is a characteristic that a change in polarization of the ferroelectric substance draws a hysterisis curve with respect to a change in applied voltage. Therefore, by detecting the change in capacitance of the ferroelectric substance in the condition that the alternating current electric field is applied to the ferroelectric substance, and distinguishing the difference in curve of the change in capacitance, it is possible to know the difference in the nonlinear dielectric constant of the ferroelectric substance, and it is also possible to know the polarization direction of the ferroelectric substance. Then, it is possible to reproduce the information recorded and held as the polarization direction.

As shown in FIG. 1, the information reproducing apparatus 10 is provided with: a probe 11; a return electrode 12; an electric field applying device 13; a resonator 14; an oscillation signal generating device 15; and an information reproducing device 16.

The probe 11 is a member for scanning the surface of the recording medium 1 (the ferroelectric layer 2) and detecting the capacitance of the ferroelectric layer 2. The probe 11 is formed on metal, such as tungsten, for example, or carbon nano-tube or the like. The probe 11 is formed in a needle shape, and its tip diameter is several nanometers to several hundreds nanometers, for example. The probe 11 is disposed above the recording medium 1, and extends perpendicularly to the surface of the recording medium 1.

The return electrode 12 has a function of applying an electric field outputted from the electric field applying device 13, to the ferroelectric layer 2, together with the back electrode 3. Moreover, the return electrode 12 has a function of forming an electrical pathway S reaching to the return electrode 12 through the ferroelectric layer 2 from the tip of the probe 11. Then, the electrical pathway S is one portion of a resonance circuit formed of capacitance Cs of the ferroelectric layer 2 and the resonator 14. In other words, the return electrode 12 is a pathway constituting one portion of a feedback circuit for determining the resonance frequency of this resonance circuit. The return electrode 12 faces or is opposed to the surface of the recording medium 1 at a predetermined interval, and is disposed near the probe 11. Specifically, the return electrode 12 is disposed above the surface located on one side of the ferroelectric layer 2, with the probe 11. A distance between the return electrode 12 and the surface of the recording medium 1 is approximately several tens nanometers to several tens micrometers, for example, Since the return electrode 12 is disposed near the probe 11, the electric field outputted from the electric field applying device 13 is applied under the tip of the probe 11 and to an area including the surrounding, in the ferroelectric layer 2. Moreover, since the return electrode 12 faces the surface of the recording medium 1 at a relatively small interval from the surface, and is disposed near the probe 11, the electrical pathway S is extremely short. By shortening the electrical pathway S, it is possible to inhibit unpredictable noise, such as stray capacitance, from mixing in when the change in capacitance of the ferroelectric layer 2 is detected. Incidentally, the return electrode 12 is formed in a ring shape, and the probe 11 is disposed in the center of the ring. By forming the return electrode 12 in the ring shape, there is an advantage that the electric field outputted from the electric field applying device 13 can be applied uniformly near the surrounding. However, with regard to the shape of the return electrode 12, it may be another shape if the position relationship with the probe 11 and the position relationship with the surface of the recording medium 1 can be properly set, as described above.

The electric field applying device 13 applies an electric field to the ferroelectric layer 2 in order to enable or facilitate the detection of the capacitance Cs of the ferroelectric layer 2 by the probe 11. The electric field applying device 13 generates an alternating current voltage or a direct current voltage, and supplies this voltage between the return electrode 12 and the back electrode 3. By this, an alternating current electric field or a direct current electric field is applied to the ferroelectric layer 2. The strength of the electric field applied by the electric field applying device 13 is lower than that of the coercive electric field of the ferroelectric layer 2. Moreover, if the electric field applied by the electric field applying device 13 is an alternating current electric field, the frequency of the alternating current electric field is approximately 5kHz to 100kHz, for example. The electric field applying device 13 can be realized by a normal electrical circuit for generating an alternating current voltage or a direct current voltage. Incidentally, in FIG. 1, an alternating current electric field or a direct current electric field is applied to the ferroelectric layer 2 via the return electrode 12 and the back electrode 3, however, this electric field can be applied to the ferroelectric layer 2 via the probe 11 and the back electrode 3.

The resonator 14 forms a resonance circuit 17, together with the capacitance Cs of the ferroelectric layer 2 detected by the probe 11. Namely, the resonator 14 has a function of determing the resonance frequency, with the capacitance Cs of the ferroelectric layer 2. Then, the resonance frequency determined in accordance with the capacitance Cs of the ferroelectric layer 2 and the resonator 14, is the frequency of an oscillation signal generated by the oscillation signal generating device 15. The average of the resonance frequency determined in accordance with the capacitance Cs of the ferroelectric layer 2 and the resonator 14 is approximately 1GHz, for example (incidentally, as described later, this resonance frequency changes centered on 1GHz, for example, in accordance with the change in capacitance of the ferroelectric layer 2). As the resonator 14, various resonators, oscillators, or transducers can be used, such as a SAW (Surface Acoustic Wave) resonator, a crystal oscillator, and a ceramic oscillator, for example. Nonetheless, since high Q factor is desirable, the SAW resonator or the crystal oscillator is desirably used as the resonator 14. Moreover, generally, the SAW resonator has higher Q factor than that of the crystal oscillator, so that using the SAW resonator as the resonator 14 is more desirable, from the viewpoint of higher Q factor.

The oscillation signal generating device 15 generates an oscillation signal with the resonance frequency determined in accordance with the capacitance Cs of the ferroelectric layer 2 detected by the probe 11 and the resonator 14. For example, the oscillation signal generating device 15 constitutes an oscillator, together with the resonance circuit 17 formed of the capacitance Cs of the ferroelectric layer 2 and the resonator 14. The oscillation signal generating device 15 can be realized not only by an amplifier circuit, but also by various elements for constituting the oscillator with the resonance circuit 17. More specifically, it is possible to apply a circuit structure (except a voltage control portion, and moreover, the capacitance of the ferroelectric layer 2 corresponds to a variable capacitance element) used for VCSO (Voltage Controlled SAW Oscillator) or VCXO (Voltage Controlled X'tal (crystal) Oscillator).

The information reproducing apparatus 16 reproduces the information held on the recording medium, on the basis of the oscillation signal generated by the oscillation signal generating device 15. As described later, the frequency of the oscillation signal changes in accordance with the change in capacitance Cs of the ferroelectric layer 2. The information reproducing apparatus 16 detects the change in frequency of the oscillation signal, and knows the change in capacitance Cs of the ferroelectric layer 2. On the basis of this, it knows the nonlinear dielectric constant of the ferroelectric layer 2, and further knows the polarization direction of the ferroelectric layer 2. Since the information is held as the polarization direction of the ferroelectric layer 2, it is possible to reproduce the information held in the ferroelectric layer 2 by such detection and analysis.

The operation of the information reproducing apparatus 10 having such a structure is as follows. When the information held on the recording medium 1 is reproduced, firstly, a not-illustrated positioning mechanism displaces the probe 11 or the recording medium 1, to thereby bring the tip of the probe 11 into contact with the surface of the recording medium 1, or bring it close to a position which is several nanometer to several tens nanometer away from the surface of the recording medium 1. Then, the electric field applying device 13 supplies, for example, an alternating current voltage between the back electrode 3 and the return electrode 12. By this, an alternating current electric field is applied to the ferroelectric layer 2. Then, due to the application of the alternating current electric field, the capacitance Cs under the tip of the probe 11 and in the surrounding area in the ferroelectric layer 2 changes alternately in accordance with the alternating current electric field. The change in capacitance Cs of the ferroelectric layer 2 (specifically, the change in capacitance Cs inside or in the surface layer of the ferroelectric layer 2, as shown in FIG. 1) is detected by the probe 11. Then, in accordance with the change in capacitance Cs of the ferroelectric layer 2, the resonance frequency of the resonance circuit 17, formed of the capacitance Cs of the ferroelectric layer 2 and the resonator 14, changes. Thus, according to this, the frequency of an oscillation signal generated by the oscillation signal generating device 15 changes. This oscillation signals is supplied to the information reproducing device 16. Then, the information reproducing device 16 recognizes the change in capacitance Cs of the ferroelectric layer 2, on the basis of the oscillation signal, and reproduces the information held in the ferroelectric layer 2.

As describe above, the information reproducing apparatus 10 uses the resonator 14 in the resonance circuit 17 for changing the frequency of the oscillation signal in accordance with the change in capacitance Cs of the ferroelectric layer 2. By using the resonator 14, it is possible to realize the resonance circuit 17 with high Q factor. By this, it is possible to make the change in capacitance Cs of the ferroelectric layer 2 follow the change in frequency of the oscillation signal, highly accurately and sensitively. Namely, even if the change in capacitance Cs of the ferroelectric layer 2 is extremely small, it is possible to change the frequency of the oscillation signal, in accordance with this small change. Moreover, even if the change in capacitance Cs of the ferroelectric layer 2 is fast, it is possible to change the frequency of the oscillation signal, in accordance with this fast change. Consequently, according to the information reproducing apparatus 10, it is possible to improve the accuracy and speed of the information reproduction.

Moreover, according to the information reproducing apparatus 10, since the resonator 14 is used, it is possible to reduce the amplitude of the alternating current electric field applied to the ferroelectric layer 2, without reducing the accuracy or SN ratio of the information reproduction. Moreover, even if such construction that a direct current electric field is applied instead of the alternating current electric field, it is possible to realize the information reproduction with high accuracy. The reason is as follows.

Namely, as described above, in the SNDM method, the difference in the curve of the change in capacitance of the ferroelectric substance when the alternating current electric field is applied to the ferroelectric substance is distinguished, and on the basis of this, the polarization direction of the ferroelectric substance is known. Specifically, firstly, the alternating current electric field is applied to the ferroelectric substance, to thereby change the capacitance of the ferroelectric substance. Then, by using the resonance circuit, the change in frequency of the oscillation signal is followed by the change in capacitance of the ferroelectric substance, and so to speak, the change in capacitance of the ferroelectric substance is converted to the change in frequency of the oscillation signal. Then, a signal detection process is performed on the change in frequency of the oscillation signal, to know the polarization direction of the ferroelectric substance. Therefore, if the sensitivity of the resonance circuit is bad, it is hardly possible to accurately convert the change in capacitance of the ferroelectric substance to the change in frequency of the oscillation signal, so that it is difficult to correctly know the polarization direction of the ferroelectric substance.

As one method to solve this problem, there is a method of increasing the amplitude of the alternating current electric field. If the amplitude of the alternating current electric field is increased, the change in capacitance of the ferroelectric substance increases, which makes a remarkable difference in the curve of the change in capacitance corresponding to the difference in the polarization direction of the ferroelectric substance. Therefore, even if the sensitivity of the resonance circuit is bad, it is possible to read the polarization direction of the ferroelectric substance from the change in frequency of the oscillation signal. However, since the strength of the alternating current electric field cannot be beyond that of the coercive electric field of the ferroelectric substance, there is a limit to increase the amplitude of the alternating current electric field. Thus, in this method, in some cases, it is impossible to sufficiently improve the accuracy of recognition of the polarization direction of the ferroelectric substance.

In contrast, according to the information reproducing apparatus 10 in the first embodiment of the present invention, the resonator 14 with high Q factor is used to form the resonance circuit 17, so that the sensitivity of the resonance circuit 17 is high. Thus, it is possible to accurately convert the change in capacitance of the ferroelectric substance to the change in frequency of the oscillation signal, and it is possible to correctly know the polarization direction of the ferroelectric substance. Moreover, since the sensitivity of the resonance circuit 17 is good, it is unnecessary to increase the amplitude of the alternating current electric field. Furthermore, since the sensitivity of the resonance circuit 17 is good, it is possible to correctly know the polarization direction of the ferroelectric substance even if the amplitude of the alternating current electric field is reduced. Therefore, it is possible to reduce the amplitude of the alternating current electric field applied to the ferroelectric layer 2, without reducing the accuracy or SN ratio of the information reproduction, and moreover, it is possible to adopt such construction that a direct current electric field is applied instead of the alternating current electric field.

### (Second Embodiment)

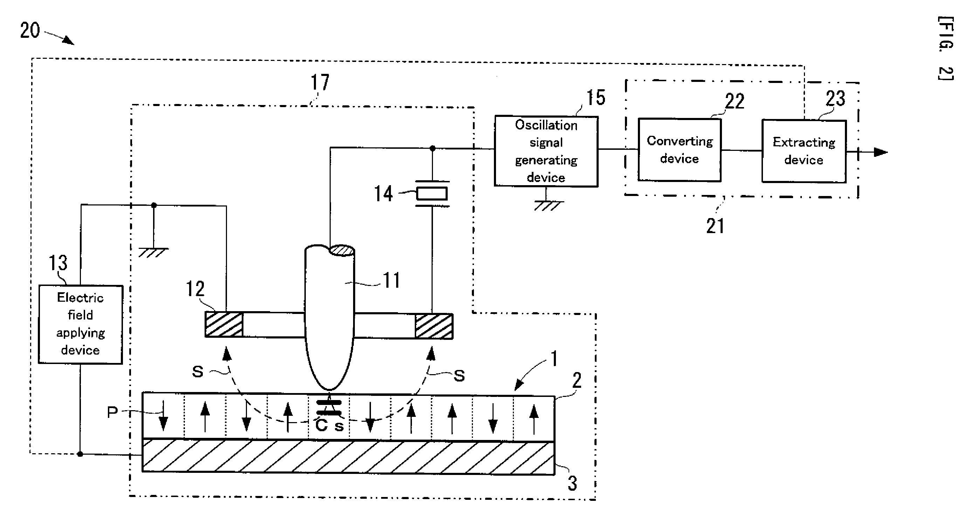

FIG. 2 shows a second embodiment of the information reproducing apparatus of the present invention. The second embodiment is characterized in that the information reproducing device appears in a more concrete form. Namely, an information reproducing apparatus 20 in FIG. 2 has an information reproducing device 21. The information reproducing device 21 is provided with: a converting device 22; and an extracting device 23.

The converting device 22 converts the change in frequency of the oscillation signal corresponding to the change in capacitance of the ferroelectric layer 2 detected by the probe 11, to a change in amplitude, and outputs a converted signal. The converting device 22 can be realized by a frequency - voltage conversion circuit, a FM demodulator, or the like, for example.

The extracting device 23 extracts a component corresponding to the change in capacitance of the ferroelectric layer 2 detected by the probe 11, from the signal converted by the converting device 22. The extracting device 23 can be realized by a detection circuit, such as a lock-in amplifier. If such construction is adopted that an alternating current voltage is supplied between the return electrode 12 and the back electrode 3 by the electric field applying device 13 to thereby apply an alternating current electric field to the ferroelectric layer 2, this alternating current electric field is desirably used as a reference signal for a signal component extraction process (detection process) of the extracting device 23 (refer to a connection line in a dashed line in FIG. 2). By this, it is possible to improve accuracy of the signal component extraction process (detection process).

### (Example)

Hereinafter, an example of the present invention will be explained with reference to the drawing. The example below is one preferable example to carry out the present invention.

A recording medium 30 is provided with: a ferroelectric layer 31; and a back electrode 32. The ferroelectric layer 31 is formed of lithium niobate (LiNbO3), for example. The back electrode 32 is formed of a conductor, such as aluminum, platinum, and copper, and is formed (laminated) on the back surface of the ferroelectric layer 31 by a thin-film formation process, such as sputtering and deposition.

An information reproducing apparatus 40 is provided with: a probe 41; a return electrode 42; an alternating current power supply 43; a SAW resonator 44; an oscillation amplifier circuit 45; a frequency - amplitude conversion circuit 46; and a lock-in amplifier 47.

The probe 41 is a member for scanning the surface of the recording medium 30 (the ferroelectric layer 31) and detecting the capacitance of the ferroelectric layer 31. The probe 41 is formed of tungsten, for example, in a needle shape, and its tip diameter is approximately several tens nanometers. When information held on the recording medium 30 is reproduced, the tip of the probe 41 approaches a reading position on the surface of the recording medium 30. A distance between the tip of the probe 41 and the surface of the recording medium 30 is approximately several nanometers to several tens nanometers. By bringing the tip of the probe 41 and the surface of the recording medium 30 close to each other up to such a small distance, it is possible to realize the same electric action as in the case where the tip of the probe 41 is in contact with the surface of the recording medium 30, while ensuring easiness and quickness of scanning the surface of the recording medium 30 by the probe 41. Moreover, the tip of the probe 41 can be also in contact with the surface of the recording medium 30.

The return electrode 42 has a function of applying an electric field outputted from the alternating current power supply 43, to the ferroelectric layer 31, together with the back electrode 32. Moreover, the return electrode 42 has a function of forming an electrical pathway S reaching to the return electrode 42 through the ferroelectric layer 31 from the tip of the probe 41. The return electrode 42 faces or is opposed to the surface of the recording medium 30 at a predetermined interval. A distance between the return electrode 42 and the surface of the recording medium 30 is approximately several hundreds nanometers, for example. Moreover, the return electrode 42 is formed in a ring shape, surrounding the probe 41.

The alternating current power supply 43 is a power supply for applying an alternating current electric field to the ferroelectric layer 31 in order to enable or facilitate the detection of the capacitance Cs of the ferroelectric layer 31 by the probe 41. The alternating current power supply 43 generates an alternating current voltage, and supplies this between the return electrode 42 and the back electrode 32. By this, an alternating current electric field is applied to the ferroelectric layer 31. The strength of the electric field applied by the alternating current power supply 43 is smaller than that of the coercive electric field of the ferroelectric layer 31, and its frequency is approximately 5kHz, for example.

The SAW resonator 44 forms a resonance circuit 49, together with the capacitance Cs of the ferroelectric layer 31 detected by the probe 41. Namely, the SAW resonator 44 has a function of determing the resonance frequency, with the capacitance Cs of the ferroelectric layer 31. The average of the resonance frequency determined in accordance with the capacitance Cs of the ferroelectric layer 31 and the SAW resonator 44 is approximately 1GHz, for example.

The oscillation amplifier circuit 45 is a circuit for generating an oscillation signal with the resonance frequency determined in accordance with the capacitance Cs of the ferroelectric layer 31 detected by the probe 41 and the SAW resonator 44. Namely, all the capacitance Cs of the ferroelectric layer 31, the SAW resonator 44, and the oscillation amplifier circuit 45 constitute an oscillator. The capacitance Cs of the ferroelectric layer 31 and the SAW resonator 44 correspond to the frequency determing circuit of the oscillator, and the oscillation amplifier circuit 45 corresponds to the amplifier circuit of the oscillator.

The frequency - amplitude conversion circuit 46 is a circuit for converting a change in frequency of the oscillation signal corresponding to a change in capacitance of the ferroelectric layer 31 detected by the probe 41, to a change in amplitude, and outputting a converted signal.

The lock-in amplifier 47 is a circuit for extracting a component corresponding to the change in capacitance of the ferroelectric layer 31 detected by the probe 41, from the signal converted by the frequency - amplitude conversion circuit 46. The alternating current voltage outputted from the alternating current power supply 43 is supplied not only to the return electrode 42 and the back electrode 32, but also to the lock-in amplifier 47. The lock-in amplifier 47 uses this alternating current electric field as a reference signal, to thereby extract the component corresponding to the change in capacitance of the ferroelectric layer 31 and reproduce the information held on the ferroelectric layer 31.

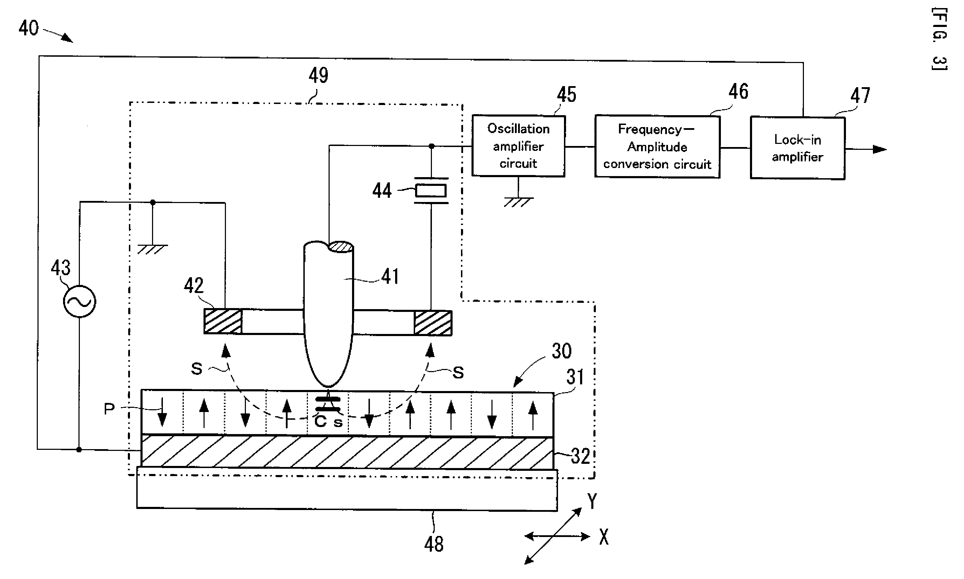

A displacement mechanism 48 is an X-Y stage, for example, and is a mechanism for displacing the recording medium 30 disposed thereon in a parallel direction (an X direction and a Y direction in FIG. 3) to the surface of the recording medium 30. Displacing the recording medium 30 by the displacement mechanism 48 realizes the scanning of the surface of the recording medium 30 by the probe 41.

### (Another Example)

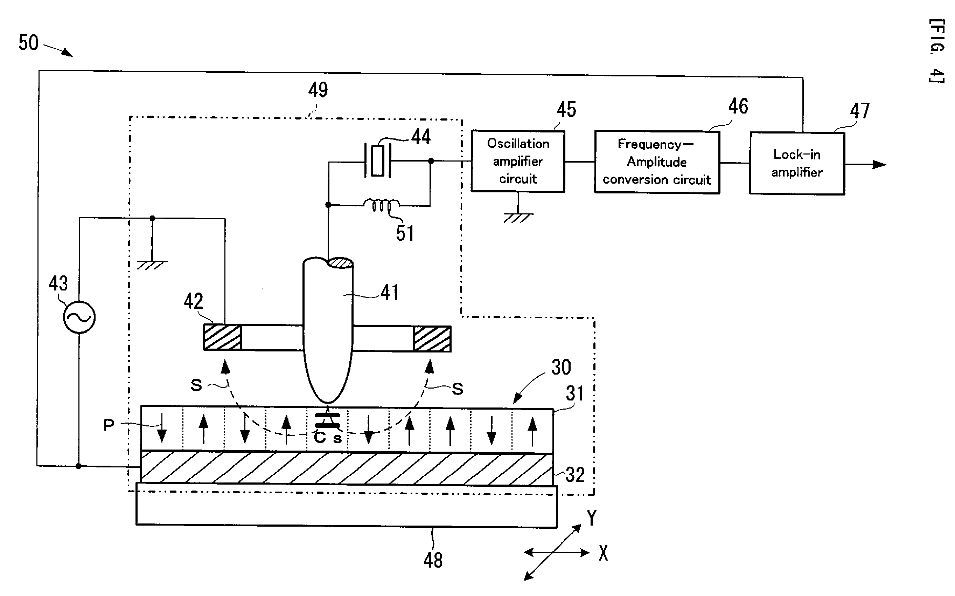

FIG. 4 shows another example of the present invention. In an information reproducing apparatus 50, an inductor 51 is further inserted between the probe 41 and the SAW resonator 44 in the resonance circuit 49, constructed from the capacitance Cs of the ferroelectric layer 31 detected by the probe 41 and the SAW resonator 44 in the above-mentioned example. Out of the resonance frequency of the SAW resonator 44, a frequency selected by the inductor 51 and the capacitance Cs of the ferroelectric layer 31 detected by the probe 41 satisfies the resonance condition of the resonance circuit 49, and this is the oscillation frequency of the oscillation amplifier circuit 45.

Incidentally, the present invention can be changed, if desired, without departing from the essence or spirit of the invention which can be read from the claims and the entire specification, and an apparatus, which involves such changes, is also intended to be within the technical scope of the present invention.

### Industrial Applicability

The information reproducing apparatus for a ferroelectric recording medium of the present invention can be applied to an information reproducing apparatus for a ferroelectric recording medium which holds information by using spontaneous polarization of a ferroelectric substance, for example.

## Claims

1. An information reproducing apparatus for reading and reproducing information from a recording medium which has a ferroelectric layer and which holds the information by using spontaneous polarization of the ferroelectric layer,
said information reproducing apparatus comprising:
a probe for scanning a surface of the recording medium and detecting a capacitance of the ferroelectric layer;
a return electrode facing the surface of the recording medium at a predetermined interval and disposed near said probe;
an electric field applying device for applying an electric field to the ferroelectric layer in order to enable detection of the capacitance of the ferroelectric layer by said probe;
a resonator for forming a resonance circuit together with the capacitance of the ferroelectric layer detected by said probe;
an oscillation signal generating device for generating an oscillation signal with a resonance frequency determined in accordance with the capacitance of the ferroelectric layer detected by said probe and said resonator; and
an information reproducing device for reproducing the information held on the recording medium on the basis of the oscillation signal generated by said oscillation signal generating device.

2. The information reproducing apparatus according to claim 1, wherein said resonator is a SAW (Surface Acoustic Wave) resonator.

3. The information reproducing apparatus according to claim 1, wherein said resonator is a crystal oscillator.

4. The information reproducing apparatus according to claim 1, wherein said electric field applying device applies an alternating current electric field to the ferroelectric layer.

5. The information reproducing apparatus according to claim 1, further comprising:
a converting device for converting a change in frequency of the oscillation signal corresponding to a change in capacitance of the ferroelectric layer detected by said probe, to a change in amplitude, and outputting a converted signal; and
an extracting device for extracting a component corresponding to the change in capacitance of the ferroelectric layer detected by said probe, from the signal converted by said converting device.
